# EUROPÄISCHE PATENTSCHRIFT

(11) **EP 0 698 436 B1**
(45) Veröffentlichungstag und Bekanntmachung des Hinweises auf die Patenterteilung: **08.04.1998**
(21) Anmeldenummer: 95110141.9
(22) Anmeldetag: 29.06.1995
(51) Int. Cl.: B23B 51/00

(54) **Bohrvorrichtung zur Herstellung von Bohrlöchern mit Hinterschneidung**
Drilling device to make holes with undercutting
Dispositif de forage à fabriquer des trous avec chambrage

(30) Priorität: 22.08.1994 DE 4429704
(43) Veröffentlichungstag der Anmeldung: 28.02.1996
(73) Patentinhaber: fischerwerke Artur Fischer GmbH & Co. KG, D-72178 Waldachtal (DE)
(72) Erfinder: Lind, Stefan, Dipl.-Ing. (FH), D-72178 Waldachtal (DE)

(56) Entgegenhaltungen:
- EP-A- 0 529 238
- EP-A- 0 568 786
- DE-A- 3 413 824
- DE-U- 9 102 401

## Beschreibung

Die Erfindung betrifft eine Bohrvorrichtung zur Herstellung von Bohrlöchern mit Hinterschneidung gemäß Oberbegriff des Anspruchs 1. Eine derartige Vorrichtung ist z.B. aus EP-A-0 336 182 bekannt.

Zur Herstellung von Bohrlöchern mit Hinterschneidung sind Bohrvorrichtungen bekannt, die zum Ausreiben der Hinterschneidung ein Verschwenken des gesamten Bohrwerkzeugs vorsehen. Durch Ausschwenken des Bohrwerkzeuges bei gleichzeitiger Rührbewegung wird von den am Bohrwerkzeug angeordneten Seitenschneiden im Bereich des Bohrlochgrundes eine Hinterschneidung ausgerieben, in die ein Spreizdübel mit aufspreizbarer Spreizhülse formschlüssig einsetzbar ist.

Derartige Bohrlöcher mit Hinterschneidung lassen sich auch in Fassadenplatten oder dergleichen einbringen, jedoch müssen dort die Hinterschneidungen sehr exakt ausgeführt werden, damit beim Einsetzen und Aufspreizen eines Spreizdübels kein zu hoher Spreizdruck entsteht. Ein zu hoher Spreizdruck kann nämlich dazu führen, daß ein Teil der Fassadenplatte wegplatzt. Um eine exakte Hinterschneidung herzustellen, sind diese Bohrvorrichtungen derart ausgestaltet, daß ein automatisches maschinengesteuertes Ausschwenken ermöglicht wird. Ferner werden Bohrwerkzeuge verwendet, die einen mit Diamantsplitter bestückten Bohrkopf aufweisen. Beim Eintauchen des mit der Antriebsachse der Bohrmaschine fluchtend eingespannten Bohrwerkzeuges in die Fassadenplatte kommt die gesamte Stirnseite des kegelstumpfförmig ausgebildeten Bohrkopfes in Eingriff.

Aus der DE-A1 41 19 350 ist eine Vorrichtung zur Herstellung von Bohrlöchern mit Hinterschneidung in Fassadenplatten bekannt, bei der die verwendete Bohrmaschine und damit auch der daran befestigte Bohrer zur Herstellung der Hinterschneidung aus der Mittelachse ausgelenkt und beim Ausreibvorgang entlang einer Kurvenscheibe zwangsweise geführt wird.

Aus der EP-A2 0 336 182 ist eine Bohrvorrichtung zur Herstellung von Bohrlöchern mit Hinterschneidung bekannt, bei der der Bohrer schwenkbar an der Bohrspindel befestigt ist. Der dort verwendete Bohrer besitzt einen erweiterten Bohrkopf, der bei Schrägstellung des Bohrers eine Hinterschneidung in einem Bohrloch ausreiben kann.

Der Erfindung liegt die Aufgabe zugrunde, eine Bohrvorrichtung zu schaffen, mit der in einfacher Weise und hoher Betriebssicherheit eine exakte Auslenkung des Bohrers zur Herstellung des Bohrloches mit Hinterschneidung ermöglicht wird.

Die Lösung dieser Aufgabe wird durch die in Anspruch 1 angegebenen Merkmale erreicht. Der Bohrerhalter ist in der als Hohlspindel ausgebildeten Bohrspindel angeordnet und mit der Bohrspindel über einen Gelenkbolzen in der Weise verbunden, daß eine Verschwenkung des Bohrerhalters aus der Bohrmittelachse möglich ist. Die Innenbohrung der Bohrspindel weist daher einen erheblich größeren Durchmesser auf als der Außendurchmesser des Bohrerhalters. Über den Gelenkbolzen ist der Bohrerhalter mit der Bohrspindel drehmomentübertragend und axial verschiebbar verbunden, so daß Bohrspindel und Bohrerhalter kongruente Bewegungen ausführen. Die Drehbewegung von der Antriebsspindel auf die Bohrspindel wird über ein Kupplungselement übertragen, das exzentrisch an einem seitlich abstehenden Flansch des Bohrerhalters und zentrisch an der Antriebsspindel angreift.

Durch einen fest vorgegebenen Abstand zwischen der Antriebseinrichtung und dem Bohrerhalter ergibt sich eine Schrägstellung des Kupplungselementes, die die Nullstellung des Bohrerhalters fixiert. In dieser Nullstellung wird die Bohrspindel gemeinsam mit der Antriebseinrichtung in dem fest fixierten Abstand zur Erstellung des zylindrischen Teils des Bohrloches nach unten bewegt. Nach Erreichen der gewünschten Bohrlochtiefe in der zu bohrenden Fassadenplatte wird die Vorschubbewegung für die Bohrspindel beendet und nur noch die Antriebseinrichtung axial nach unten verschoben.

Durch die Verkürzung des Abstandes zwischen der Bohrspindel und der Antriebseinrichtung wird über das gelenkig gelagerte Kupplungselement der Bohrerhalter seitlich weggedrückt und in der Bohrspindel verschwenkt. Durch diese Schwenkbewegung führt der Bohrer in der Bohrlochtiefe eine Taumelbewegung aus, durch die die Hinterschneidung des Bohrloches in der Fassadenplatte ausgerieben wird.

Nach dem Ausreiben der Hinterschneidung wird zunächst die Antriebseinrichtung über die an ihr angreifende Hubeinrichtung auf den ursprünglichen Abstand zurückgefahren, so daß wieder die Nullstellung des Bohrerhalters vorliegt. Danach wird mit der an der Bohrspindel angreifenden Hubeinrichtung der im Bohrerhalter eingespannte Bohrer aus dem Bohrloch herausbewegt. Durch die direkte Verbindung der Antriebsspindel mit dem Bohrerhalter über das Kupplungselement wird eine einfache und funktionssichere Auslenkung des Bohrerhalters erreicht. Des weiteren ergibt sich durch die geringe Schwenkbewegung des Kupplungselementes eine Anordnung, die nahezu keinem Verschleiß unterliegt und damit eine hohe Lebensdauer aufweist.

Die Begrenzung der axialen Bewegung von Bohrspindel und Antriebseinrichtung und damit die Fixierung des Abstandes zwischen der Antriebseinrichtung und der Bohrspindel erfolgt über die beiden Hubeinrichtungen. Zur Erhöhung der Genauigkeit ist es vorteilhaft, daß die Nullstellung und Auslenkung des Bohrerhalters in der Bohrspindel durch verstellbare Anschläge einstellbar ist. Sind derartige Anschläge vorhanden, können als Hubeinrichtungen einfache Pneumatikzylinder verwendet werden. Des weiteren ist es zweckmäßig, die Hubeinrichtung der Antriebseinrichtung mit einer Hubsperre zu versehen, die nach Erreichen der Bohrlochtiefe freigegeben wird.

Als Bohrer sind je nach Material der zu bohrenden Fassadenplatten Hartmetallbohrer oder Diamantbohrer verwendbar. Bei Verwendung von Diamantbohrern ist es zweckmäßig, daß der Bohrerhalter, Bohrer und die Antriebsspindel eine zentrische Bohrung für die Zuführung von Kühlmittel aufweisen und zwischen Antriebsspindel und Bohrerhalter eine flexible Schlauchverbindung besteht.

Die Erfindung wird nachfolgend anhand von in der Zeichnung dargestellten Ausführungsbeispielen näher erläutert.

Es zeigen:
Figur 1 eine Bohrvorrichtung ohne Kühlmittelzuführung in Nullstellung,
Figur 2 eine Bohrvorrichtung mit Kühlmittelzuführung mit verschwenktem Bohrerhalter,
Figur 3 einen am Ausführungsbeispiel gemäß Figur 1 angeordneten Tiefenanschlag.

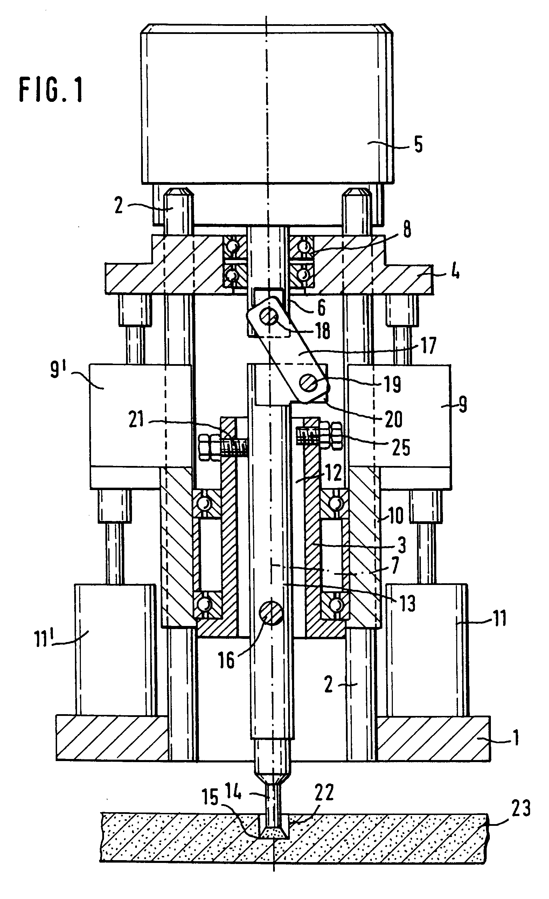

Die Bohrvorrichtung gemäß Figur 1 besteht im wesentlichen aus einem Säulengestell 1 mit vier an den Eckpunkten eines Quadrates angeordneten Säulen 2, an denen sowohl die als Hohlspindel ausgebildete Bohrspindel 3 und die Halterung 4 für die Antriebseinrichtung 5 axial verschiebbar gelagert sind. Die Antriebsspindel 6 der Antriebseinrichtung 5 ist in der Halterung 4 zentrisch in der Bohrmittelachse 7 über ein Kugellager 8 befestigt, so daß mit der Halterung 4 auch die Antriebseinrichtung axial bewegt wird. Die Verschiebung in axialer Richtung der Halterung 4 erfolgt über eine Hubeinrichtung 9, 9', die im vorliegenden Ausführungsbeispiel durch zwei pneumatische Zylinder gebildet ist. Die beiden Zylinder 9, 9' sind auf einem hohlförmigen Führungsblock 10 angeordnet, in dem die Bohrspindel 3 ebenfalls über Kugellager gelagert ist. Bei einer Verschiebung des Führungsblocks 10 wird somit die Halterung 4 und damit die Antriebseinrichtung 5 mit dem durch die Hubeinrichtung 9 vorgegebenen Abstand mitverschoben. Die axiale Verschiebung des Führungsblocks 10 und damit der Bohrspindel 3 erfolgt ebenfalls über eine durch zwei Pneumatikzylinder 11, 11' gebildete Hubeinrichtung.

In der Innenbohrung 12 der Bohrspindel 3 ist der Bohrerhalter 13 angeordnet, an dessen unteren Ende der Bohrer 14 mit seitlich abstehenden Schneiden 15 eingespannt ist. Der Bohrerhalter 13 ist mit der Bohrspindel 3 über einen Gelenkbolzen 16 drehmomentübertragend und axial verschiebbar verbunden. Der Gelenkbolzen 16 ermöglicht des weiteren, daß der Bohrerhalter 13 in der Innenbohrung 12 der Bohrspindel 3 verschwenkbar ist.

Die Drehmomentübertragung von der Antriebsspindel 6 auf den Bohrerhalter 13 und über den Gelenkbolzen 16 auf die Bohrspindel 3 erfolgt über ein Kupplungselement 17, das über Achsbolzen 18, 19 an der Antriebsspindel 6 und einem seitlich am Bohrerhalter 13 abstehenden Flansch 20 befestigt ist.

Figur 1 zeigt die Bohrvorrichtung in Nullstellung, bei der die Bohrmittelachse 7 mit der Antriebsachse fluchtet. Diese Stellung wird durch den Abstand zwischen der Antriebsspindel 6 und dem Bohrerhalter 13 bestimmt, der wiederum durch die Hubeinrichtung 9, 9' fixiert wird. Zur Unterstützung der Fixierung dieser Nullstellung ist in der Bohrspindel 3 ein durch eine Schraube gebildeter Anschlag 21 angeordnet, der an der Außenfläche des Bohrerhalters 13 anstößt. Zur Herstellung des zylindrischen Teils des Bohrlochs 22 in einer Fassadenplatte 23 kann auch eine Nullstellung des Bohrerhalters 13 angewandt werden, bei der der Bohrerhalter 13 geringfügig gegenüber der Bohrmittelachse 7 ausgelenkt ist. Dadurch entsteht bereits eine geringfügige Taumelbewegung des Bohrers 14, die nur einen Teilbereich der Umfangsfläche der Bohrerschneide in Eingriff bringt. Dadurch ergibt sich eine längere Standzeit für das Bohrwerkzeug.

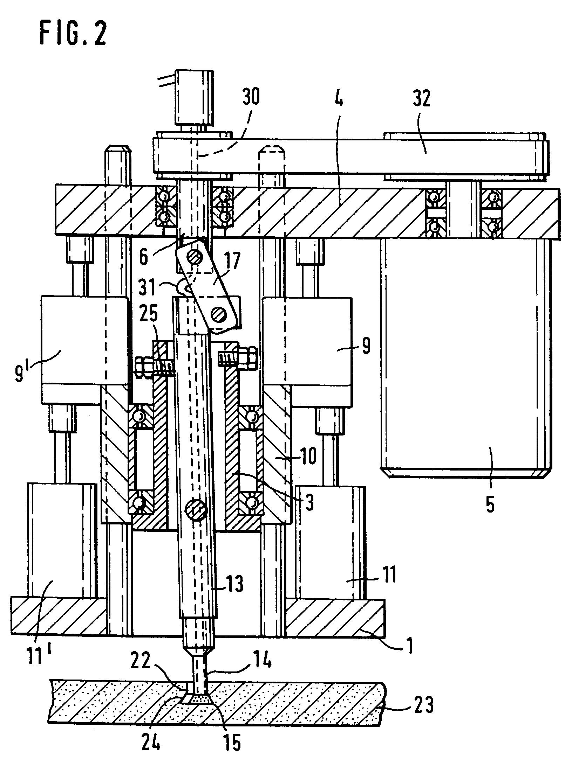

Zur Bohrlocherstellung wird der Führungsblock 10 mit der Bohrspindel 3 und dem Bohrerhalter 13 über die Hubeinrichtung 11, 11' bis zur Erreichung der gewünschten Bohrlochtiefe nach unten bewegt. Bei dieser axialen Verschiebung wird die Antriebseinrichtung 5 über die Halterung 4 ohne den Abstand zwischen der Antriebsspindel 6 und dem Bohrerhalter 13 zu verändern mitgeführt. Nach dem Erreichen der Bohrlochtiefe wird über die Hubeinrichtung 9, 9' der Abstand zwischen der Antriebsspindel 6 und dem Bohrerhalter 13 verkürzt, so daß über das Kupplungselement 17 eine Auslenkung des Bohrerhalters 13 erfolgt. Durch diese Auslenkung wird der Bohrer 14 in die Gegenrichtung verschwenkt und die Hinterschneidung 24 des Bohrloches 22 in der Fassadenplatte 23 ausgerieben. Die Verschwenkung des Bohrerhalters 13 kann ebenfalls über einen Anschlag 25 begrenzt werden. Diese ausgelenkte Stellung des Bohrerhalters 13 zur Herstellung der Hinterschneidung 24 ist in Figur 2 dargestellt.

Beim Ausführungsbeispiel gemäß Figur 2 wird als Bohrwerkzeug 14 ein Diamantbohrer verwendet, der zweckmäßigerweise beim Bohren über eine Kühlflüssigkeit gekühlt wird. Zu diesem Zweck weist der Bohrerhalter 13, der Bohrer 14 und die Antriebsspindel 6 eine durchgehende zentrische Bohrung 30 auf, durch die das Kühlmittel zugeführt wird. Der Abstand zwischen der Antriebsspindel 6 und dem Bohrerhalter 13 wird über eine Schlauchverbindung 31 überbrückt. Zur Vereinfachung der Kühlmittelzufuhr ist bei diesem Ausführungsbeispiel die Antriebseinrichtung 5 seitlich an der Halterung 4 angeordnet. Die Drehmomentübertragung auf die Antriebsspindel 6 erfolgt über ein Keilriemengetriebe 32.

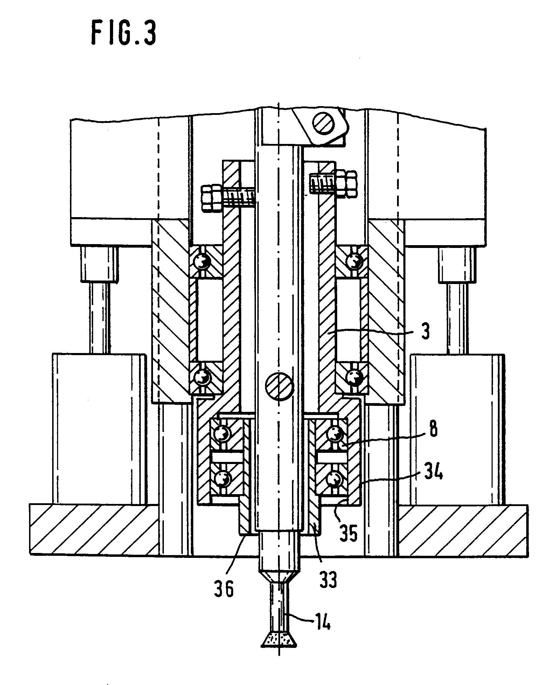

Figur 3 zeigt das Ausführungsbeispiel gemäß Figur 1 mit einem am unteren Ende der Bohrspindel 3 angeordneten Tiefenanschlag 33. Zur Anordnung des Tiefenanschlages 33 ist die Bohrspindel 3 mit einer Verlängerung 34, die eine erweiterte Bohrung 35 aufweist, versehen. In dieser Verlängerung 34 ist der hülsenförmige Tiefenanschlag 33 über Kugellager 8 verdrehbar zur Bohrspindel 3 eingesetzt. Durch Aufsitzen der Stirnseite 36 des Tiefenanschlages 33 auf der Fassadenplatte wird die axiale Verschiebung der Bohrspindel 3 begrenzt. Der Abstand der Stirnseite 36 von der Bohrerstirnseite bestimmt die Bohrlochtiefe.

## Patentansprüche

1. Bohrvorrichtung zur Herstellung von Bohrlöchern mit Hinterschneidung, insbesondere in Fassadenplatten (23) aus Stein, Keramik, Beton oder dergleichen mit einem gegenüber der Bohrmittelachse auslenkbaren Bohrerhalter (13), an dem der Bohrer (14) absteht, der am Bohrkopf seitlich überstehende Schneiden (15) aufweist und der mittels einer Antriebseinrichtung (5) von einer mit einer Hubeinrichtung (9) in Verbindung stehenden Bohrspindel (3) in Rotation versetzt wird, **dadurch gekennzeichnet**, daß der Bohrerhalter (13) in der als Hohlspindel ausgebildeten Bohrspindel (3) über einen quer in der Bohrspindel (3) angeordneten Gelenkbolzen (16) aus der Bohrmittelachse (7) verschwenkbar einliegt und über den Gelenkbolzen (16) mit der Bohrspindel (3) drehmomentübertragend und axial verschiebbar verbunden ist, und daß der Bohrerhalter (13) mit der axial über eine Hubeinrichtung (9, 9') verschiebbaren Antriebseinrichtung (5) über ein gelenkig gelagertes Kupplungselement (17) verbunden ist, das exzentrisch an einem seitlich abstehenden Flansch (20) des Bohrerhalters (13) und zentrisch an der Antriebsspindel (6) angreift.

2. Bohrvorrichtung nach Anspruch 1, **dadurch gekennzeichnet**, daß die Nullstellung und Auslenkung des Bohrerhalters (13) in der Bohrspindel (3) durch verstellbare Anschläge (21, 25) einstellbar ist.

3. Bohrvorrichtung nach Anspruch 1, **dadurch gekennzeichnet**, daß die Hubeinrichtungen für die Antriebseinrichtung (5) und Bohrspindel (3) Pneumatikzylinder sind.

4. Bohrvorrichtung nach Anspruch 1, **dadurch gekennzeichnet**, daß die Hubeinrichtung (9, 9') der Antriebseinrichtung (5) eine Hubsperre aufweist, die nach Erreichen der Bohrlochtiefe freigegeben wird.

5. Bohrvorrichtung nach Anspruch 1, **dadurch gekennzeichnet**, daß der Bohrerhalter (13), Bohrer (14) und die Antriebsspindel (6) eine zentrische Bohrung (30) für die Zuführung von Kühlmittel aufweisen, und zwischen Antriebsspindel (6) und Bohrerhalter (13) eine flexible Schlauchverbindung (31) besteht.

6. Bohrvorrichung nach Anspruch 1, **dadurch gekennzeichnet**, daß im Bereich des unteren Endes der Bohrspindel (3) eine gegenüber der Bohrspindel (3) verdrehbar gelagerte Anschlaghülse (33) angeordnet ist, deren Stirnfläche (36) in einem der Bohrlochtiefe entsprechenden Abstand zur Bohrerstirnseite zurückgesetzt ist.

## Claims

1. A drilling device for producing drilled holes with an undercut, in particular in facing panels (23) of stone, ceramics, concrete or similar material, having a drill bit holder (13) which is arranged to be displaced outwards relative to the centre line of drilling, from which drill bit holder there projects the drill bit (14) having at the drilling head laterally projecting cutting edges(15), and which is caused to rotate by means of a drive device (5) by a drilling shaft (3) connected to a lifting device (9), characterized in that the drill bit holder (13) lies in the drilling shaft (3), which is in the form of a hollow shaft, so that it can be swivelled out of the centre line of drilling (7) by way of a hinge bolt (16) arranged transversely in the drilling shaft (3), and is joined by way of the hinge bolt (16) to the drilling shaft (3) so as to transfer torque and so as to be axially displaceable, and the drill bit holder (13) is joined by way of a hinge-mounted coupling element (17) to the drive device (5) which is axially displaceable by means of a lifting device (9, 9'), the coupling element (17) acting eccentrically on a laterally projecting flange (20) of the drill bit holder (13) and centrically on the drive shaft (6).

2. A drilling device according to claim 1, characterized in that the neutral position and the outward displacement of the drill bit holder (13) in the drilling shaft (3) is settable by adjustable stop members (21, 25).

3. A drilling device according to claim 1, characterized in that the lifting devices for the drive device (5) and the drilling shaft (6) are pneumatic cylinders.

4. A drilling device according to claim 1, characterized in that the lifting device (9, 9') of the drive device (5) has a locking mechanism preventing lifting, which is released when the drilled hole depth has been reached.

5. A drilling device according to claim 1, characterized in that the drill bit holder (13), the drill bit (14) and the drive shaft (6) have a central bore (30) for the admission of coolant, and between the drive shaft (6) and the drill bit holder (13) there is a flexible hose connection (31).

6. A drilling device according to claim 1, characterized in that in the region of the lower end of the drilling shaft (3) there is arranged a stop sleeve (33) mounted so as to rotate with respect to the drilling shaft (3), the end face (36) of which stop sleeve is set back from the drill bit end face at a distance corresponding to the depth of the drilled hole.

## Revendications

1. Dispositif de fraisage pour réaliser des trous avec chambrage, en particulier dans des panneaux de façade (23) en pierre, céramique, béton ou analogues, avec un porte-fraise (13) qui peut dévier par rapport à l'axe de perçage et sur lequel saille la fraise (14) qui présente des arêtes de coupe (15) qui dépassent latéralement sur la tête de fraise et qui est entraînée en rotation au moyen d'un dispositif d'entraînement (5) par une broche de fraisage (3) reliée à un dispositif d'avance (9), caractérisé par le fait que le porte-fraise (13) repose dans la broche de fraisage (3), conçue en tant que broche creuse, avec liberté de pivoter par rapport à l'axe de perçage (7) par l'intermédiaire d'un axe d'articulation (16) disposé transversalement dans la broche de fraisage (3) et qui, par l'intermédiaire de l'axe d'articulation (16), est relié à la broche de fraisage (3) avec transmission du mouvement de rotation et liberté de coulissement axial, et que le porte-fraise (13) est relié au dispositif d'entraînement (5), qui peut coulisser axialement par l'intermédiaire d'un dispositif d'avance (9, 9') par l'intermédiaire d'un élément de couplage (17) qui est porté par articulation et qui agit de façon excentrée sur un rebord (20) du porte-fraise (13) qui dépasse latéralement et de façon centrée sur la broche d'entraînement (6).

2. Dispositif de fraisage selon la revendication 1, caractérisé par le fait que la position zéro et la déviation du porte-fraise (13) dans la broche de fraisage (3) peuvent se régler au moyen de butées réglables (21, 25).

3. Dispositif de fraisage selon la revendication 1, caractérisé par le fait que les dispositifs d'avance pour le dispositif d'entraînement (5) et pour la broche de fraisage (3) sont des vérins pneumatiques.

4. Dispositif de fraisage selon la revendication 1, caractérisé par le fait que le dispositif d'avance (9, 9') du dispositif d'entraînement (5) présente un verrouillage de l'avance qui se déverrouille lorsqu'est atteinte la profondeur de perçage.

5. Dispositif de fraisage selon la revendication 1, caractérisé par le fait que le porte-fraise (13), la fraise (14) et la broche d'entraînement (6) présentent un perçage central (30) pour l'amenée de liquide de refroidissement et qu'entre la broche d'entraînement (6) et le porte-fraise (13) il y a une liaison par tuyau flexible (31).

6. Dispositif de fraisage selon la revendication 1, caractérisé par le fait que dans la zone de l'extrémité inférieure de la broche de fraisage (3) est disposée une douille de butée (33) qui est portée avec liberté de rotation par rapport a la broche de fraisage (3) et dont la surface frontale (36) se trouve en arrière de la face frontale de la fraise, d'une distance fonction de la profondeur de perçage.
